# EUROPEAN PATENT APPLICATION

(11) **EP 3 099 012 A1**
(43) Date of publication of application: **30.11.2016**
(21) Application number: 15305785.6
(22) Date of filing: 26.05.2015
(51) Int. Cl.: H04L 12/24

(54) **A METHOD FOR DETERMINING A TOPOLOGY OF A COMPUTER CLOUD AT AN EVENT DATE**

(71) Applicant: ALCATEL LUCENT, 92100 Boulogne-Billancourt (FR)
(72) Inventor: BOUZID, Makram, 91620 NOZAY (FR); AGHASARYAN, Armen, 91620 NOZAY (FR); KOSTADINOV, Dimitre Davidov, 91620 NOZAY (FR)
(74) Representative: Loyer & Abello

(57) **Abstract**

The invention relates to a method for determining a topology of a computer cloud at an event date, comprising:
- providing (34) a first data repository comprising topology snapshots associated to a snapshot date, comprising all horizontal dependencies associating two VMs running a same application, and all vertical dependencies associating a VM to the host machine hosting the VM,
- providing (35) a second data repository comprising topology actions, which are modifications of horizontal or vertical dependencies of the computer cloud,
- retrieving (36) a topology snapshot from the first data repository, wherein the topology snapshot has a snapshot date which is earlier than an event date,
- retrieving (37) intermediate topology actions from the second data repository, having action dates which are comprised between the snapshot date of the topology snapshot and the event date,
- sequentially applying the intermediate topology actions in an increasing action dates order to the topology snapshot.

## Description

### Field of the invention

The invention relates to retrieving the topology of a network when an event occurs, especially an alarm. The invention applies particularly well to complex networks like cloud infrastructures, especially multi-tenant cloud infrastructures.

### Background of the invention

Data processing system like cloud infrastructures and more specifically multi-tenant cloud infrastructure are complex and dynamic.

Surveillance of such systems is challenged by the high volume of measurements, data and alarms to be processed. Often, a single fault or problem may produce multiple alarms in cascade, and a given alarm can be caused by different faults: this creates ambiguities in the interpretation of alarms by the human operator, and also a possibly-overwhelming number of alarms presented to him.

As a consequence, it may be crucial to react quickly to alarms. A delayed understanding of the faults negatively impacts the customer satisfaction. Accordingly, an identification of the cloud topology when the fault or problem occurs is an essential feature for an efficient management of a root cause analysis.

However, there is a delay between the date of detection of a fault or problem and the date when the fault or problem occurs.

### Summary of the invention

Aspects of the disclosure are based on the idea of finding the right topology that was in place in a computer cloud at the date when an event occurs.

In an embodiment, the invention provides a method for determining a topology of a computer cloud at an event date, wherein the computer cloud comprises a plurality of host machines and a plurality of virtual machines VMs which are each hosted on host machines of the cloud, wherein the VMs are running applications,
the method comprising:
- providing a first data repository comprising topology snapshots, each associated to a snapshot date, wherein a topology snapshot comprises all horizontal dependencies of the computer cloud at a snapshot date, wherein an horizontal dependency associates two VMs running a same application, and all vertical dependencies of the computer cloud at the snapshot date, wherein a vertical dependency associates a VM to the host machine hosting the VM,
- providing a second data repository comprising topology actions, wherein a topology action is a modification of an horizontal or vertical dependency of the computer cloud,
- retrieving a topology snapshot from the first data repository, wherein the topology snapshot has a snapshot date which is earlier than an event date,
- retrieving intermediate topology actions from the second data repository, wherein the intermediate topology actions have action dates which are comprised between the snapshot date of the topology snapshot and the event date, and
- sequentially applying the intermediate topology actions in an increasing action dates order to the topology snapshot, in order to retrieve a topology of the computer cloud at the event date.

Thanks to these features, the topology of the computer cloud at the event date is retrieved efficiently.

In embodiment, such a method can comprise one or more of the features below.

In an embodiment, the method further comprises:
- prior to the step of retrieving the topology snapshot, determining if a snapshot date which is the closest to the event date of all topology snapshots stored in the first data repository is earlier or later than the event date,
if the closest snapshot date is later than the event date, retrieving from the second data repository intermediate topology actions, wherein the intermediate topology actions have action dates which are comprised between the event date and the snapshot date of the topology snapshot,
constructing a sequence of reverse intermediate topology actions, wherein the reverse topology actions are the reverse modification of an horizontal or vertical dependency of the computer cloud,
sequentially applying the reverse intermediate topology actions in a decreasing action dates order to the topology snapshot, in order to retrieve the topology of the computer cloud at the event date,
if the latest snapshot date is earlier than the event date, pursuing the method hereinabove described.

In an embodiment, the actions are selected in the group consisting of: adding resources to the cloud, creating resources in the cloud, migrating resources in the cloud, stopping resources in the cloud, destroying resources in the cloud, allocating resources in the cloud, creating network links in the cloud or destructing network links in the cloud,
wherein the resources are VMs or host machines.

In an embodiment, the step of providing the first data repository comprises:
- sequentially storing topology snapshots of the computer cloud in relation with successive snapshot dates into the first data repository.

In an embodiment, the step of providing the second data repository comprises:
- sequentially storing topology actions in relation with associated topology action dates, into the second data repository,

The step of sequentially storing the snapshots may be performed in various manners.

In an embodiment, the step of sequentially storing the snapshots is performed periodically.

In an embodiment, the snapshots are temporarily stored in a buffer.

In an embodiment, the topology actions are temporarily stored in a buffer.

There are various manners to implement the first and second data repositories. In an embodiment, the first and the second data repositories are implemented in a unique data repository. In an embodiment, the first and the second data repositories are implemented in a unitary manner. In an embodiment, the first and the second data repositories are implemented in a distributed manner.

In an embodiment, the time interval between two successive snapshots dates stored in the first data repository is a function of the time interval between two successive topology action dates.

In an embodiment, the time interval between two successive snapshots dates is comprised between 100 and 2000 times an average time interval between two successive topology action dates.

In an embodiment, the method further comprises:
- receiving an event message comprising the event date.

The invention also provides a device for determining a topology of a computer cloud at an event date, wherein the computer cloud comprises a plurality of host machines and a plurality of virtual machines VMs which are each hosted on host machines of the cloud, wherein the VMs are running applications, the device being configured for:
- providing a first data repository comprising topology snapshots, each associated to a snapshot date, wherein a topology snapshot comprises all horizontal dependencies of the computer cloud at a snapshot date, wherein an horizontal dependency associates two VMs running a same application, and all vertical dependencies of the computer cloud at the snapshot date, wherein a vertical dependency associates a VM to the host machine hosting the VM,
- providing a second data repository comprising topology actions, wherein a topology action is a modification of an horizontal or vertical dependency of the computer cloud,
- retrieving a topology snapshot from the first data repository, wherein the topology snapshot has a snapshot date which is earlier than an event date,
- retrieving intermediate topology actions from the second data repository, wherein the intermediate topology actions have action dates which are comprised between the snapshot date of the topology snapshot and the event date, and
- sequentially applying the intermediate topology actions in an increasing action dates order to the topology snapshot, in order to retrieve a topology of the computer cloud at the event date.

Further features and advantages of the invention will appear from the following description of embodiments of the invention, given as nonlimiting examples, with reference to the accompanying drawings listed hereunder.

### Brief description of the drawings

Fig. 1 shows schematics of three topology snapshots of a computer cloud on a time line, wherein the topology comprises vertical and horizontal dependencies of virtual machines deployed on host machines.
Fig. 2 illustrates successive tenant actions modifying the topology of the cloud between each snapshot on the time line of Figure 1, wherein an event occurs at an event date and is detected after an intermediary snapshot.
Fig. 3 illustrates successive tenant actions modifying the topology of the cloud between each snapshot on the time line of Figure 1, wherein an event occurs at an event date and is detected before the following snapshot.
Fig. 4 shows a real-time topology image builder for retrieving the topology of a cloud when an event occurs.
Fig. 5 is a schematic of a method for retrieving a topology of a cloud when an event occurs, in an embodiment.

### Detailed description of the embodiments

According to embodiments of the invention, large and complex data processing systems like multi-tenant cloud infrastructures are addressed.

A multi-tenant cloud infrastructure allows mutualizing the resources, e.g. host machines, which are hardware machines, among several clients or "tenants". Each tenant can use the cloud infrastructure in an independent way of the others, by creating, migrating, stopping, destroying resources such as virtual machines (VM) and running application on the resources. Indeed, the dependencies between participating entities or resources such as virtual machines and host machines are set according to real-time assignments. As a consequence, the topology of such multi-tenant cloud infrastructures is very dynamic. Therefore, when a fault occurs in the cloud, there is a delay between the date of detection of the fault and the date when the fault occurred. Indeed, faults are detected through analysis of metrics gathered by a cloud infrastructure monitoring system. Such a detection is very necessary for root cause analysis in order to perform recovery actions on the cloud. However, root cause analysis may be inefficient when applied to a topology of a cloud at a different date than the fault date.

For example, actual cases for fault alarms can be a Computer Processing Unit (CPU) overloaded, CPU starving, e.g. a VM experiences problems due to lack of CPU resources, an excessive response delay, e.g. a virtual machine VM experiences problems due to excessive response time from an horizontally dependent VM, with which it has many interactions since both are running the same application App.

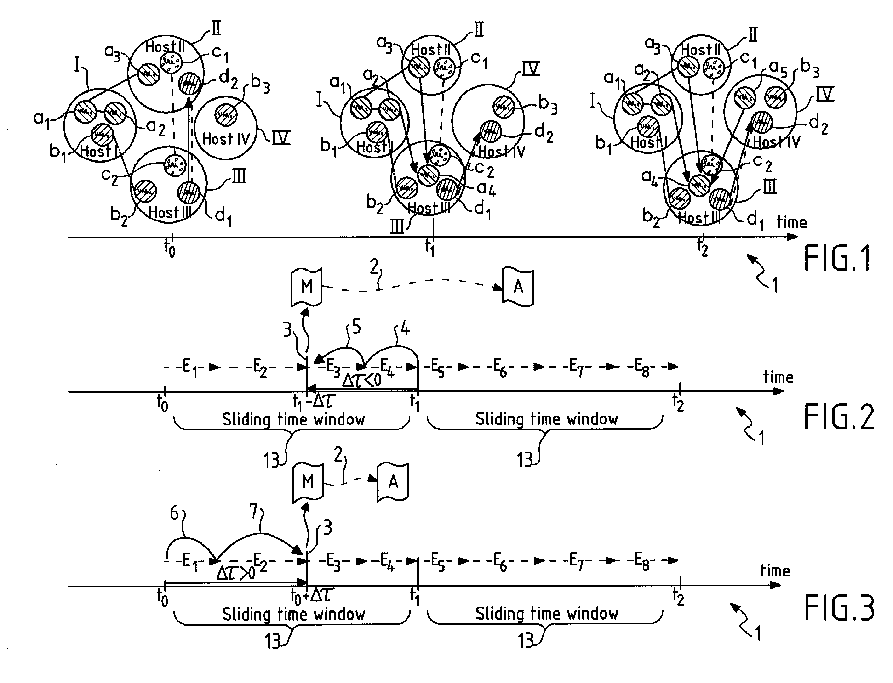

FIG. 1 shows schematics of snapshots of a topology of a cloud on a time line 1 at snapshot dates to, t₁ and t₂, wherein the topology comprises vertical and horizontal dependencies in an example of deployments of a plurality of virtual machines (VMs) aₙ, bₙ, cₙ and dₙ on host machines Host I, Host II, Host III and Host IV, wherein n is an integer number. The VMs aₙ are those deployed by a tenant **a**, the VMs bₙ are those deployed by a tenant **b**, the VMs cₙ are those deployed by a tenant **c** and the VMs dₙ are those deployed by a tenant **d**.

On each host machine are collocated one or more VMs.

Some virtual machines, e.g. VM b1 and VM b2 are running a same application App. For instance, the virtual machine VM b1 is running a database, while the virtual machine VM b2 is an application server making regular requests to this database.

The snapshot of the topology at the snapshot date to will now be described more in detail.

The snapshot illustrates two types of dependencies which are horizontal dependencies between VMs, and vertical dependencies.

The vertical dependencies correspond to hardware allocation relationships, i.e. the deployment of a given virtual machine onto a particular host machine. In the example depicted on FIG. 1, the virtual machine VM a1 depends vertically on the host machine Host I, which is represented by the fact that the VM a1 is comprised in the circle I. Similarly, the virtual machine VM a3 depends vertically on the host machine Host II. The dependence relationship is oriented: the host machine Host I supports the virtual machines VM a1, VM a2 and VM b1: these virtual machines can then have vertical dependency information indicating that they are supported by the host machine Host I.

The horizontal dependencies correspond to applicative relationships as depicted by connecting lines, e.g. dash-dot line between VM b1 and VM b2. Like in the example depicted on the FIG. 1, two virtual machines beholding to a same application App are horizontally dependent. Similarly, two applications beholding to a same tenant of a multi-tenant infrastructure, or two applications sharing some VMs are horizontally dependent.

The dependency can also be oriented like for the vertical dependency. The virtual machine VM b2 is supported by the virtual machine VM b1, an accordingly the virtual machine VM b2 can have "horizontal dependency information" indicating that it is supported by the virtual machine VM b1.

The snapshot of the topology at the snapshot date t₁ will now be described more in detail. As depicted, by contrast with the snapshot of the topology at the snapshot date to, the VM d2 is not hosted by the host machine Host II but now by the host machine Host IV. A new VM a4 is hosted by the host machine Host III and is in horizontal dependency with the VM a2. Indeed, between the snapshot dates to and t₁, i.e. in a sliding time window 13 (FIG. 2), tenants have modified their use of the cloud resources by the successive tenant actions Eₙ as follows:
E1: Tenant **a** creates VM a4 on host machine Host III - Status OK
E2: Tenant **d** migrates VM d2 from Host II to Host IV- Status OK -
E3: Tenant **a** creates a network link between VM a2 (Host I) and VM a4 (Host III) - Status OK
E4: Tenant **a** creates a network link between VM a3 (Host II) and VM a4 (Host III) - Status OK
   Moreover, the snapshot of the topology at the snapshot date t₂ also is modified compared to the one at the snapshot date t₁ by the following tenant actions:
E5: Tenant **a** creates VM a5 on Host IV - Status OK
E6: Tenant **b** migrates VM b3 from Host IV to Host II- Status Failed
E7: Tenant **b** migration cancelled due to E6 failure - Status OK-
E8: Tenant **a** creates a network link between VM a4 (Host III) and VM a5 (Host IV) - Status OK

The above described successive tenant actions are represented on Figures 2 and 3.

When a fault occurs, a cloud management system which performs measures M on the cloud further performs analysis. The fault may produce multiple alarms in cascade, and a given alarm can be caused by different faults. Indeed, the fault propagates in the cloud until the cloud management system raises an alarm A, as shown by arrow 2. The example depicted on FIG 2 shows that the alarm A is raised when the tenant **b** performs the action E6 on the cloud (Status failed).

To retrieve the topology snapshot corresponding to the faulty measure date 3, the last snapshot before the action E6 date may be used as a start point. By rolling back the actions E4 and E3, one can retrieve the right topology image of the faulty measure date 3, as shows by arrows 4 and 5. In this configuration, the snapshot date t₁ is intermediary between the faulty measure date 3 and the alarm A.

Similarly, with reference to FIG 3, assuming that the A alarm is raised before an intermediary snapshot date t₁, the right topology image of the faulty measure date 3 may be retrieved by applying the actions E1 and E2 from the last snapshot date t₀, as shown by arrows 6 and 7.

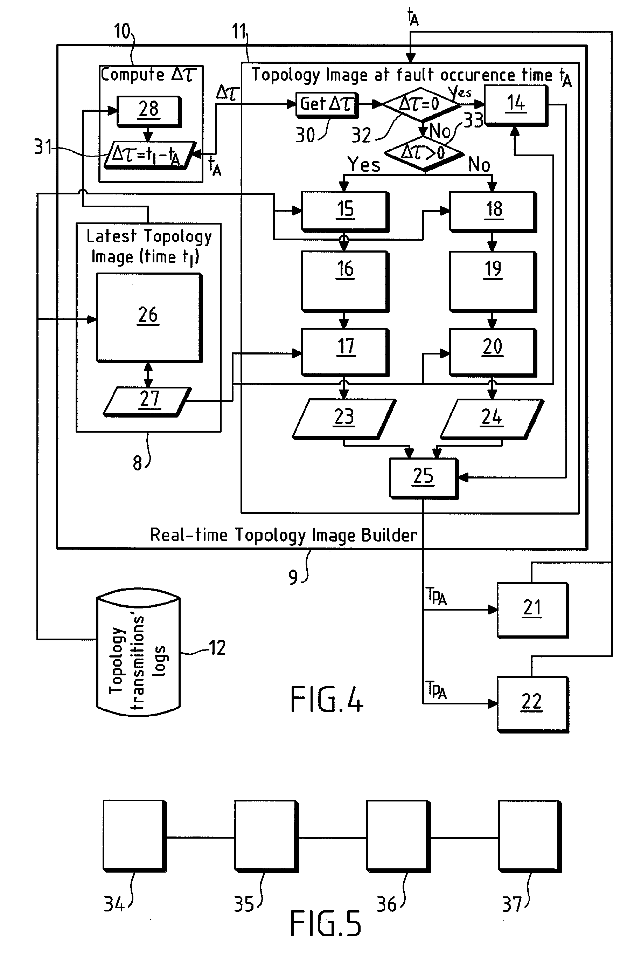

Now, with reference to FIG 4, a Real-time Topology Image Builder 9 enabling to retrieve the right topology image of the cloud at the faulty measure date 3 will be described.

The Real-Time Cloud Topology Image Builder 9 comprises the following components:
- a latest topology image maintainer 8, which maintains an up-to-date snapshot image of the current topology at an up-to-date latest topology snapshot date t_{I}.
- a time difference Δτ computation module 10, wherein the time difference Δτ=t_{I}-t_{A} is the difference between the latest topology snapshot date t_{I} and the faulty measure time t_{A},
- an on-demand topology image creator 11 using a rollback mechanism or applying tenants' actions on latest topology image depending on the computed Δτ sign (positive or negative). If Δτ = 0, the latest cloud topology image is sent back to the requester. If Δτ > 0, tenants' actions are undone from the last topology image according to their decreasing time order. This case is illustrated by the example pictured on FIG. 2. If Δτ <0 tenants' actions are applied on the last topology image according to their increasing time order. This case is illustrated by the example pictured on FIG. 3.

The Real-Time Cloud Topology Image Builder 9 is connected to a data repository 12 comprising topology transitions' log, i.e. the tenant action records registered in association with tenant action dates. The topology actions can be recorded in various formats, for example in text format. Below is an example of a topology action record in a text format used in OpenStack, which is an open source operating system: 2015-05-20 10:26:58.844 2547 INFO nova.osapi_compute.wsgi.server [req-05b83d29-5526-406c-90cb-b4c5bd190b09 None] 172.25.70.109 "DELETE /v2/711ed637615541cdbe6ff937f0c6d00c/servers/556bccdd-1a7f-4efa-8a20-bf5f6580057a HTTP/1.1" status: 204 len: 179 time: 0.2047331
wherein,
- the topology action is encoded by the word "DELETE",
- the tenant Id is "711ed637615541cdbe6ff937f0c6d00c",
- the VM Id is "556bccdd-1a7f-4efa-8a20-bf5f6580057a",
- the action status is "status: 204".

The Real-Time Cloud Topology Image Builder 9 is further connected to an Anomaly detection & alarm generation module 21 and to an Alarm correlation & fault diagnosis module 22.

The components of the Real-Time Cloud Topology Image Builder 9 will now be described more in detail.

The latest topology image maintainer 8 is configured to get from the data repository 12 the tenants' actions which are applied to the cloud topology. In a step 26, the latest topology image maintainer 8 maintains an up-to-date snapshot image of the current topology based on the last image and all performed tenants' actions in the last sliding time window 13. Then, in a step 27, the latest topology image maintainer 8 provides a topology image Tp at the latest topology snapshot date t_{I}. The step 26 is performed at regular or flexible time intervals, depending on global cloud monitoring system configuration and/or needs. In the step 27, the tenants' actions are applied according to their increasing timestamp order on the last topology image. The obtained new image Tp is stored locally as the current or latest cloud topology image with the associated latest topology snapshot date t_{I} at which it was generated.

In the following, the steps performed by the Real-Time Cloud Topology Image Builder 9 as a response to a request of the module 21 or the module 22 to the Real-Time Cloud Topology Image Builder 9 in order to retrieve the cloud topology image at a given fault occurrence time t_{A} will now be described. First, the time difference computer 10 gets, in a step 28, the latest topology snapshot date t_{I} from the latest topology image maintainer 8. Then, the latest topology image maintainer 8 calculates the time difference Δτ between the latest topology snapshot date t_{I} and the faulty measure time t_{A} in a step 31.

Then, the topology image creator 11 gets the time difference from the time difference Δτ computer 10 in a step 30.

The topology image creator 11 then performs a first test 32 to determine if the time difference Δτ =0. If the time difference Δτ = 0, a step 14 is performed in which the latest cloud topology image available Tp, i.e. at the latest topology snapshot date t_{I}, is retrieved from the latest topology image maintainer 8 and sent back to the requester modules 21 or 22. The latest cloud topology image available Tp is in this case the topology image Tp_{A} is the retrieved image of the topology of the cloud at the faulty measure time t_{A}.

If the time difference Δτ is not equal to 0, the topology image creator 11 performs a second test 33 to determine if the time difference Δτ > 0.

If the time difference Δt > 0, a step 15 is applied in which tenants' topology modification actions that were performed between the time (t_{I}-Δτ) and the latest topology snapshot date t_{I} are retrieved from the data repository 12 as well as the latest cloud topology image from the latest topology image maintainer 8. The tenants' transformation actions are then sorted according to their decreasing timestamp order in a sorting step 16 and then undone from the last topology image Tp accordingly, in a roll back step 17. In a step 23, a topology image Tp_{A} is stored, which corresponds to the topology image Tp with rolled-back tenant actions. The topology image Tp_{A} is the retrieved image of the topology of the cloud at the faulty measure time t_{A}=t_{I}-Δτ.

If the time difference Δt <0, tenants' topology modification actions that were performed between the latest topology snapshot date t_{I} and the time (t_{I}+Δτ) are retrieved in step 18 from the data repository 12 as well as the latest cloud topology image from the latest topology image maintainer 8. The tenants' transformation actions are then sorted according to their increasing timestamp order in a sorting step 19 and applied on the last topology image Tp accordingly, in an applying step 20. In a step 23, a topology image Tp_{A} is stored, which corresponds to the topology image Tp with applied tenant actions. The topology image Tp_{A} is the retrieved image of the topology of the cloud at the faulty measure time t_{A}=t_{I}+Δτ.

In a step 25, the topology image creator 11 gets the topology image Tp_{A} from the steps 14, 23 or 24, depending on the results of the first and second tests. The topology image creator 11 then sends the retrieved topology image Tp_{A} at time t_{A} to the modules 21 or 22.

With reference now to Figure 5, a method for retrieving a topology of a cloud when an event occurs in an embodiment will now be described.

The method comprises:
- in a step 34, providing a first data repository comprising topology snapshots, each associated to a snapshot date, wherein a topology snapshot comprises all horizontal dependencies of the computer cloud at a snapshot date, wherein an horizontal dependency associates two VMs running a same application, and all vertical dependencies of the computer cloud at the snapshot date, wherein a vertical dependency associates a VM to the host machine hosting the VM,
- in a step 35, providing a second data repository comprising topology actions, wherein a topology action is a modification of an horizontal or vertical dependency of the computer cloud,
- in a step 36, retrieving a topology snapshot from the first data repository, wherein the topology snapshot has a snapshot date which is earlier than an event date, alternatively, the topology snapshot has a snapshot date which is later than the event date,
- in a step 37, retrieving intermediate topology actions from the second data repository, wherein the intermediate topology actions have action dates which are comprised between the snapshot date of the topology snapshot and the event date, sequentially applying the intermediate topology actions in an increasing action dates order to the topology snapshot, alternatively sequentially applying the reversed intermediate topology actions in a decreasing action dates order to the topology snapshot, in order to retrieve a topology of the computer cloud at the event date.

Elements such as the Real-time Topology Image Builder 9 could be e.g. hardware means like e.g. an ASIC, or a combination of hardware and software means, e.g. an ASIC and an FPGA, or at least one microprocessor and at least one memory with software modules located therein. The Real-time Topology Image Builder 9 and each component of the Real-time Topology Image Builder 9 may be implemented in a unitary or in a distributed manner. In an embodiment, the Real-time Topology Image Builder 9 is implemented directly on the multi-tenant cloud. In a preferred embodiment, the Real-time Topology Image Builder 9 is implemented on dedicated hardware computers.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method for determining a topology of a computer cloud at an event (A) date (M), wherein the computer cloud comprises a plurality of host machines (I, II, III, IV) and a plurality of virtual machines VMs (a1 to a5, b1 to b3, c1 to c2, d1 to d2) which are each hosted on host machines of the cloud, wherein the VMs are running applications,
the method comprising:
- providing (34) a first data repository (8) comprising topology snapshots, each associated to a snapshot date, wherein a topology snapshot comprises all horizontal dependencies of the computer cloud at a snapshot date, wherein an horizontal dependency associates two VMs running a same application, and all vertical dependencies of the computer cloud at the snapshot date, wherein a vertical dependency associates a VM to the host machine hosting the VM,
- providing (35) a second data repository (12) comprising topology actions (E1 to E8), wherein a topology action is a modification of an horizontal or vertical dependency of the computer cloud,
- retrieving (36) a topology snapshot from the first data repository, wherein the topology snapshot has a snapshot date (t₀) which is earlier than the event (A) date (M),
- retrieving (37) intermediate topology actions from the second data repository, wherein the intermediate topology actions have action dates which are comprised between the snapshot date (t₀) of the topology snapshot and the event (A) date (M),
- sequentially applying the intermediate topology actions in an increasing action dates order to the topology snapshot, in order to retrieve a topology of the computer cloud at the event (A) date (M).

2. The method according to claim 1, further comprising:
- prior to the step of retrieving the topology snapshot, determining (33) if a snapshot date which is the closest to the event date of all topology snapshots stored in the first data repository is earlier or later than the event date,
if the closest snapshot date is later than the event date, retrieving (15) from the second data repository intermediate topology actions, wherein the intermediate topology actions have action dates which are comprised between the event date and the snapshot date of the topology snapshot,
constructing a sequence of reverse intermediate topology actions (16), wherein the reverse topology actions are the reverse modification of an horizontal or vertical dependency of the computer cloud,
sequentially applying (17) the reverse intermediate topology actions in a decreasing action dates order to the topology snapshot, in order to retrieve the topology of the computer cloud at the event date,
if the latest snapshot date is earlier than the event date, pursuing the method of claim 1.

3. The method according to claim 1 or 2, wherein the actions are selected in the group consisting of: adding resources to the cloud, creating resources in the cloud, migrating resources in the cloud, stopping resources in the cloud, destroying resources in the cloud, allocating resources in the cloud, creating network links in the cloud or destructing network links in the cloud,
wherein the resources are VMs or host machines.

4. The method according to any of claim 1 to 3, wherein the step of providing the first data repository comprises:
- sequentially storing topology snapshots of the computer cloud in relation with successive snapshot dates into the first data repository.

5. The method according to claim 4, wherein the step of providing the second data repository comprises:
- sequentially storing topology actions in relation with associated topology action dates, into the second data repository,

6. The method according to claim 4, wherein the step of sequentially storing the snapshots is performed periodically.

7. The method according to claim 4, wherein the snapshots are temporarily stored in a buffer.

8. The method according to claim 5, wherein the topology actions are temporarily stored in a buffer.

9. The method according to claim 4, wherein the time interval between two successive snapshots dates stored in the first data repository is a function of the time interval between two successive topology action dates.

10. The method according to claim 5, wherein the time interval between two successive snapshots dates is comprised between 100 and 2000 times the time interval between two successive topology action dates.

11. The method according to any of claim 1 to 10, further comprising
- receiving an event message comprising the event date.

12. A device for determining a topology of a computer cloud at an event (A) date (M), wherein the computer cloud comprises a plurality of host machines and a plurality of virtual machines VMs which are each hosted on host machines of the cloud, wherein the VMs are running applications,
the device being configured for:
- providing a first data repository comprising topology snapshots, each associated to a snapshot date, wherein a topology snapshot comprises all horizontal dependencies of the computer cloud at a snapshot date, wherein an horizontal dependency associates two VMs running a same application, and all vertical dependencies of the computer cloud at the snapshot date, wherein a vertical dependency associates a VM to the host machine hosting the VM,
- providing a second data repository comprising topology actions, wherein a topology action is a modification of an horizontal or vertical dependency of the computer cloud,
- retrieving a topology snapshot from the first data repository, wherein the topology snapshot has a snapshot date which is earlier than the event (A) date (M),
- retrieving intermediate topology actions from the second data repository, wherein the intermediate topology actions have action dates which are comprised between the snapshot date of the topology snapshot and the event (A) date (M),
- sequentially applying the intermediate topology actions in an increasing action dates order to the topology snapshot, in order to retrieve a topology of the computer cloud at the event (A) date (M).
